# EUROPEAN PATENT APPLICATION

(11) **EP 1 898 300 A2**
(43) Date of publication of application: **12.03.2008**
(21) Application number: 07020126.4
(22) Date of filing: 25.04.2003
(51) Int. Cl.: G06F 3/048

(54) **A mobile device for displaying information content**

(30) Priority: 03.10.2002 FI 20021759
(62) Divisional of application: 03732763.2
(71) Applicant: Nokia Corporation, 02150 Espoo (FI)
(72) Inventor: Balle, Henrik, 2500 Copenhagen V (DK); Hard, John, 214 38 Malmo (SE)
(74) Representative: Skinner, Michael Paul

(57) **Abstract**

A device, comprising: a display, having a display area, for displaying information content; a user input device; and a processor, for controlling the display, arranged to incrementally change the size of the display area while displaying the information content, in response to successive inputs from the user input device.

## Description

### FIELD OF THE INVENTION

Embodiments of the invention relate to a mobile device for displaying information content.

### BACKGROUND TO THE INVENTION

Current mobile devices display information content in a manner determined at manufacture. Some mobile devices have two physically distinct configurations where the whole of the display is used in 'portrait' for one configuration and the whole of the display is used in 'landscape' in the other configuration. A dedicated hardware switch detects when the user converts the device between configurations by, for example, opening or folding the device.

It would be desirable to allow the manner in which information is presented by the mobile device to be varied as and when is suitable. In particular, it would be desirable to allow a user flexibility in controlling the variation.

### BRIEF DESCRIPTION OF THE INVENTION

According to a first embodiment there is provided a mobile device for displaying information content, comprising: at least one input key associated with a display; a display for displaying information content with a first orientation and control content, adjacent an input key, indicating its function; and a processor, for controlling the display, arranged to vary the first orientation of the information content to a second orientation and maintain control content adjacent the input key.

According to the first embodiment there is provided a method of controlling the display of a mobile device comprising the steps of: displaying information content with a first orientation and control content adjacent an input key, indicating the key's function; and changing the first orientation to a second orientation while maintaining control content adjacent the input key.

The orientation of the information content independently of the control content allows information to be presented the correct way up without changing the orientation of the mobile device and without affecting the functionality of the device.

When the information content orientation is changed, the control content associated with a first input key may be swapped with the control content associated with a second input key. When the information content orientation is changed, the orientation of the control content may be changed.

According to a second embodiment there is provided a mobile device for displaying information content, comprising: a user interface including at least one input key and a display, having a variable display area, for displaying within the variable display area information content; a user input device; and a processor, for controlling the display, arranged to vary the display area of the display in response to input from the user input device.

According to the second embodiment there is provided a method of controlling the display of a mobile device comprising the steps of: displaying information content within a first display area; and changing the size of the first display area while displaying the information content in response to input from a user.

The resizing of the display area for the information content may enable the creation of information content in the mobile device that can be viewed correctly on another device and may enable the correct presentation of information content in the mobile device that was created on another device. This is particularly useful when the information content is a picture made up of a collection of spaced alphanumeric characters and the similarity of the collection of alphanumeric characters to the picture depends upon the display area in which the alphanumeric characters are framed.

According to a third embodiment there is provided a mobile device for displaying information content, comprising: a display for displaying information content in a display area of a user-determined size and orientation; a user input device; and a processor, for controlling the display, operable to vary the user-determined orientation and/or size of the display area, in response to inputs from the user input device.

According to the third embodiment there is provided a method of controlling the display of a mobile device comprising the steps of: displaying information content within a first display area with a first orientation; changing the size of the first display area; and changing the orientation of the information content.

The ability to be able to both re-size what is displayed and to change its orientation, enables a user to share information content received from another device with a person standing next to them in the form created by the originator and without having to rotate the mobile device.

The software control of the orientation of the information content may be incorporated within the game-play of a game played by a user on the mobile device. It may also enable the handedness of the mobile device to be changed, so that it can be switched from right-handed use to left-handed use.

The term information content includes map images, photographic images, alphanumeric text messages and images from games.

### BRIEF DESCRIPTION OF THE DRAWINGS

For a better understanding of the present invention reference will now be made by way of example only to the accompanying drawings in which:
Fig. 1 schematically illustrates a hand-held mobile device 10 for displaying information to a user.
Fig. 2 illustrates one possible user interface for the mobile device 10
Figs 3A, 3B and 3C illustrate the successive rotation of the information content without rotation of control content;
Figs 4A, 4B, 4C and 4D illustrate the successive rotation of the information content with rotation of control content;
Figs 5A, 5B, 5C and 5D illustrate the successive rotation of the information content with rotation and interchange of control content; and
Figs 6A, 6B, 6C illustrate the successive reduction in size of a display area with each actuation of the user input device.

### DETAIILED DESCRIPTION OF EMBODIMENTS OF THE INVNETION

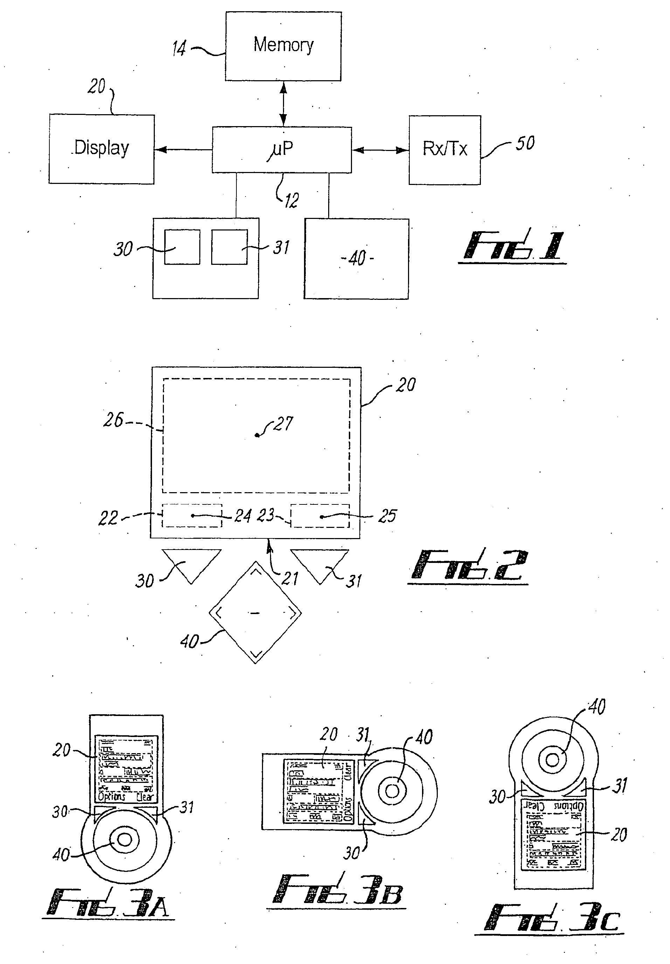

Fig. 1 schematically illustrates a hand-held mobile device 10 for displaying information to a user. The mobile device 10 may be a personal digital assistant, a mobile telephone or the like. The mobile device 10 illustrated in this example is a mobile telephone.

The mobile device 10 comprises: a processor 12; a memory 14; a display 20; a first input key 30 and a second input key 31; a user input device 40; and a radio frequency transceiver 50.

The processor 12 receives input from the first input key 30, the second input key 31, the user input device 40 and the radio frequency transceiver 50. The processor 12 provides outputs to the display 20 and the radio frequency transceiver 50. The processor 12 can also read from and write to the memory 14.

The operation of the mobile device 10 is controlled by software computer program instructions loaded into the processor 12 from the memory 14.

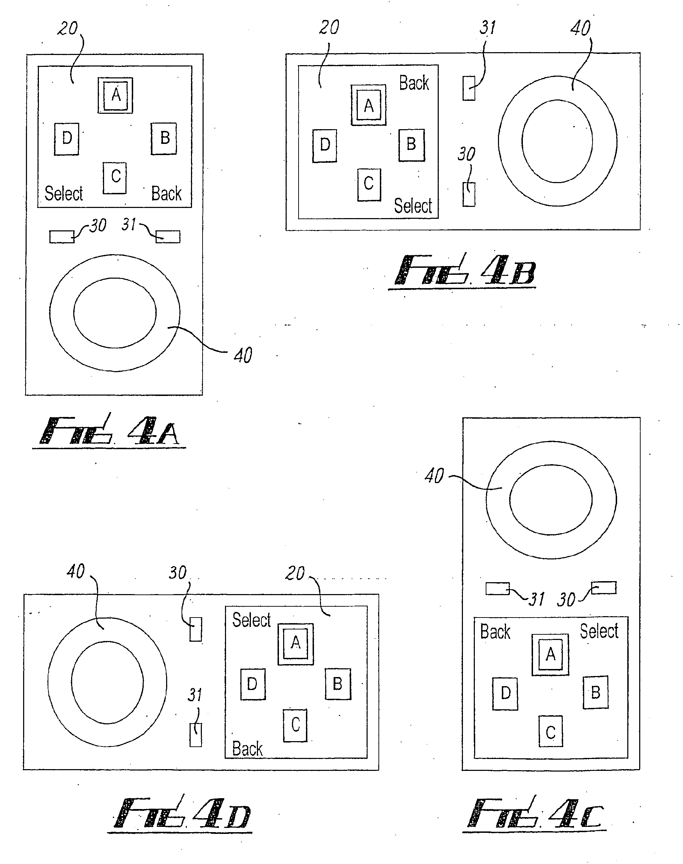

Fig. 2 illustrates one possible user interface for the mobile device 10. The first input key 30 and the second input key 31 are located between the user input device 40 and the display 20, adjacent an edge 21 of the display 20. The user input device 40 is, in this example, a five-way input key but it could be any suitable type of input device such as a joystick or a rotator dial. The function of the user input device 40 is not dedicated as the processor 12 is operable to vary its function under the control of the software loaded into the processor 12.

The display 20 has a first portion 22 and a second portion 23 at the edge 21 adjacent the first input key 30 and the second input key 31 respectively. The first portion 22 is an array of pixels centred at a first off-centre origin 24. The second portion 23 is an array of pixels centred at a second off-centre origin 25. The display 20 also has a central display area 26 centred on an origin 27 towards the centre of the display 20.

The display is controlled by the processor 12 to display content. This content may include information content that is displayed in the central display area 26 and first and second control content that is displayed in the first and second portions 22, 23 respectively.

The first control content displayed in the first display portion 22, indicates the function of the adjacent first input key 30 associated with that display portion. The first input key 30 is a "soft" or programmable key. The processor 12 is operable, under the control of the loaded software, to change the function of the first input key 30 and to simultaneously change the first control content to indicate the new function of the first input key 30 to a user.

The second control content displayed in the second display portion 23, indicates the function of the adjacent second input key 31 associated with that display portion. The second input key 31 is a "soft" or programmable key. The processor 12 is operable, under the control of the loaded software, to change the function of the second input key 31 and to simultaneously change the second control content to indicate the new function of the second input key 31 to a user.

The information content displayable in the central display area 26 conveys information to the user as opposed to describing the functions or operating conditions of the device. The information content may be images produced while playing a game, a photographic image, text, a map, content received from another user via the radio frequency transceiver 50, content composed by the user etc.

The orientation of the displayed information content can be controlled by a user of the device 10. Depending upon how this feature is implemented, the user may rotate the information content within a fixed display area or may rotate a display area where the orientation of the information content is fixed within the display area. In the following, the latter implementation will be described, although this is not intended to limit the invention as claimed. The display area 26 is preferably, but not necessarily square.

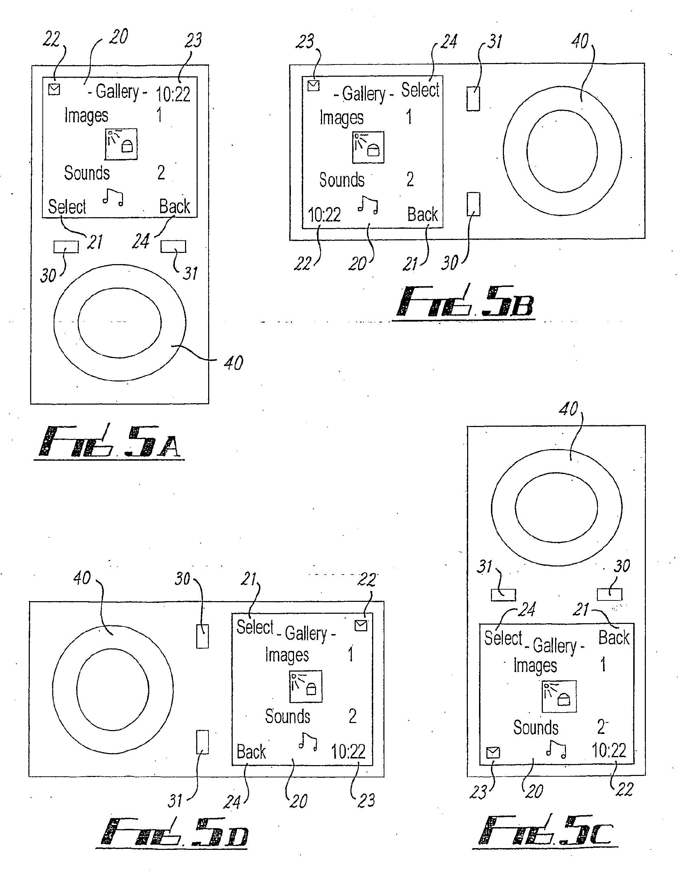

The processor 12 controls the display 20. It is operable, when in a user selected "rotating mode", to respond to user input via the user input device to rotate the display area 26 in increments of ninety degree. The user can therefore, with successive actuations of the user input device 40, change the orientation of the information content. Figs 3A, 3B, and 3C illustrate the successive rotation of the information content about the central origin 27 by 90 degree increments in the clockwise direction. In this example the user input device 40 is a rotator wheel and turning the rotator wheel in a clockwise direction rotates the information content in clockwise increments of 90 degrees and turning the rotator wheel in an anti-clockwise direction rotates the information content in anti-clockwise increments of 90 degrees.

As the processor varies the orientation of the information content, the first and second control content remains in the first and second portions 22, 23 of the display adjacent their associated input keys 30, 31.

In the embodiment illustrated in Figs 3A to 3C, the control content has a fixed position and a fixed orientation.

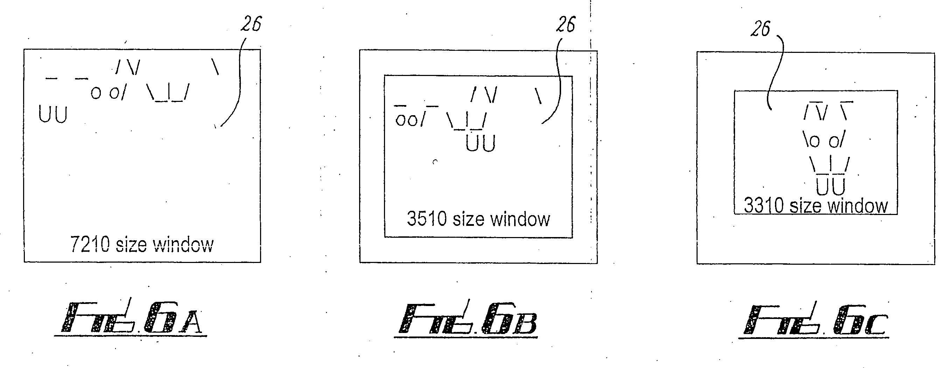

In another embodiment illustrated in Figs 4A to 4D, the processor, is operable to rotate the first and second control content about their respective first and second off-centre origins 24, 25 synchronously with the rotation of the information content. The incremental rotations of the first and second control content is at the same time, in the same direction and by the same amount as the incremental rotations of the information content. The origins 27, 24 and 25 may be fixed or may be translated slightly with each incremental rotation. Figs 4A, 4B, 4C and 4D illustrate the successive rotation of the information content with rotation, but without movement or interchange of control content. Thus the 'negative' action, which is "back" in this example is always associated with the same, second input key 32 and the 'affirmative' action, which is "select" in this example is always associated with the same, first input key 31. The orientation of "back" and "select" are, however, varied as the orientation of the information content varies.

In another embodiment illustrated in Figs 5A to 5D, the processor, is operable to rotate control content associated with the first and second input keys 30, 31 synchronously with the rotation of the information content and also interchange the functions (and therefore the control content) associated with the first and second input keys 30, 31. The incremental rotations of the control content is at the same time, in the same direction and by the same amount as the incremental rotations of the information content. In these Figs. there are four separate control content elements "select", a mail icon, a time indicator and "Back" located at four separate corners 21, 22, 23 and 24 of the display. As the information content is rotated the control content elements are interchanged between the corners 21, 22, 23 and 24. Thus in Figs 5A and 5D, the first input key is associated with the control content element "Select" and in Figs 5B and 5C it is associated with the "Back" control content element.

Therefore, before the change in orientation of the information content the first input key has a first function and is associated with first control content displayed adjacent it and the second input key has a second function and is associated with second control content displayed adjacent it and after the change in orientation of the information content the first input key has the second function and is associated with the second control content displayed adjacent it and the second input key has the first function and is associated with the first control content displayed adjacent it.

The variation of the orientation of the information content and control content can occur while it is being displayed.

Alternatively, or in addition to the variation of the orientation of the information content, the size of the display area 26 may be varied by the user.

The processor 12 controls the display 20. It is operable, when in a user selected "resizing mode", to respond to user input via the user input device to change the size of the display area 26 incrementally. The user can therefore, with successive actuations of the user input device 40, change the size of the display area. Figs 6A, 6B, and 6C illustrate the successive reduction in size of display area 26 with each actuation of the user input device. The user input device may be a rotator wheel. Turning the rotator wheel in a clockwise direction reduces the display area 26. Turning the rotator wheel in anti-clockwise direction increases the display area 26.

In Fig 6A, the display area 26 is at full size. The device 10 in this example is a NOKIA ® 7210 mobile telephone. An alphanumeric text message, which has been composed on a NOKIA® 3310 mobile telephone and received by the mobile device 10 via the radio frequency transceiver 50, is displayed using a text message reader application. The message is displayed as information content in the display area 26. The user enters the "resizing mode" and actuates the user input device 40. The processor 12 responds by reducing the size of the display area 26 to that of a NOKIA® 3510 mobile telephone, which has a lower resolution of display than the NOKIA ® 7210 mobile telephone as illustrated in Fig. 6B. The user then actuates the user input device 40 again and the processor 12 responds by reducing the size of the display area 26 to that of a NOKIA® 3310 mobile telephone, which has a lower resolution of display than the NOKIA ® 3510 mobile telephone as illustrated in Fig. 6C. This reduction of the display area 26 recreates the alphanumeric text message in the form in which it was composed.

The incremental changes to the display area 26 with each actuation of the user input device 40 are predetermined. The incremental changes to the display area are performed while displaying the information content. The areas of the display outside the display area may be disabled to conserve power.

In another implementation, the information content originates in the mobile device 10 and not from another device. The processor 12, provides a text message composing application in which the display area is the area in which the message can be composed.

In other implementations it is possible for the resizing of the display area to be automatic or semi-automatic. The mobile device 10 may determine the correct display area 26 for received information content from a parameter received with the information content. The parameter may indicate the display area in which the message was composed, for example. The mobile device 10 may determine the correct display area 26 in which to compose information content for transmission to a particular person, from a parameter stored in the mobile device. The parameter may, for example, indicate the maximum size of display area of the mobile device of that user. The mobile device 10 may automatically adjust the display area size to the correct size or it may give the user the option of switch to the correct display area size.

Although embodiments of the present invention have been described in the preceding paragraphs with reference to various examples, it should be appreciated that modifications to the examples given can be made without departing from the scope of the invention as claimed.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

A mobile device for displaying information content, comprising:
at least one input key associated with a display;
a display for displaying information content with a first orientation and control content, adjacent an input key, indicating its function; and
a processor, for controlling the display, arranged to vary the first orientation of the information content to a second orientation and maintain control content adjacent the input key.

The mobile device, further comprising a user input device, wherein the processor is operable to vary the user-determined orientation of the information content and maintain control content adjacent the input key, in response to input from the user input device.

The mobile device, wherein the functionality of the user input device is controlled by the processor.

The mobile device, wherein the processor is arranged to vary the user determined orientation of the information content between four predetermined orientations.

The mobile device, wherein the processor is arranged to vary the user determined orientation of the information content vary by successive increments of 90 degrees rotation about a first origin in the display.

The mobile device, wherein the processor, is operable to vary the user-determined orientation of the information content while it is displayed.

The mobile device wherein the control content for the input key varies as the function of the input key is varied by the processor.

A mobile device wherein the processor, when varying the orientation of the information content maintains the same control content adjacent the input key.

The mobile device wherein the control content has a fixed orientation with respect to the mobile device.

The mobile device wherein the processor is operable to rotate the information content about a first axis and simultaneously rotate the control content about a second axis, by ninety degrees.

The mobile device wherein the processor is operable to simultaneously rotate the information content and the control content, in response to input from the user input device.

The mobile device wherein the first origin and the second origin are fixed.

A method of controlling the display of a mobile device comprising the steps of:
displaying information content with a first orientation and control content adjacent an input key, indicating the key's function; and
changing the first orientation to a second orientation while maintaining the control content adjacent the input key.

The method wherein the step of changing the first orientation is performed in response to user input while displaying the information content.

The method, further comprising the step of changing the control content and/or its orientation when changing the orientation of the information content.

A mobile device for displaying information content, comprising: a user interface including at least one input key and a display, having a variable display area, for displaying within the variable display area information content;
a user input device; and
a processor, for controlling the display, arranged to vary the display area of the display in response to input from the user input device.

The mobile device, wherein the processor in response to input from the user input changes the display area size from a first one of a predetermined plurality of display area sizes to a second one of the predetermined plurality of display area sizes.

The mobile device, wherein the processor in response to input from the user input varies the display area while displaying the information content.

The mobile device, comprising a radio frequency transceiver, wherein the information content originates in another device and is received by the radio frequency transceiver from the another device.

The mobile device, wherein the information content originates in the device.

The mobile device, wherein the information content is alphanumeric text data.

The mobile device, wherein the processor, provides a text message handling application in which the display area for the text message is variable in response to input from the user input device.

The mobile device, wherein the user input device is a rotatable dial.

A method of controlling the display of a mobile device comprising the steps of:
displaying information content within a first display area; and
changing the size of the first display area while displaying the information content in response to input from a user.

A mobile device for displaying information content, comprising:
a display for displaying information content in a display area of a user-determined size and orientation;
a user input device; and
a processor, for controlling the display, operable to vary the user-determined orientation and size of the display area, in response to inputs from the user input device.

The mobile device, further comprising at least one input key associated with a display; wherein the display is operable to display control content, adjacent the input key, indicating its function and wherein the control content remains adjacent the input key when the display area is resized.

The mobile device, wherein the display information has a predetermined and fixed orientation with respect to the display area so that a variation in the display area produces a concomitant variation in the orientation of the information content.

The mobile device, wherein the processor in response to first input from the user input device changes the display area size from a first one of a predetermined plurality of display area sizes to a second one of the predetermined plurality of display area sizes.

The mobile device, wherein the processor in response to second input from the user input devices changes the orientation of the display area from a first one of a predetermined plurality of orientations to a second one of the predetermined plurality of orientations.

The mobile device, wherein the processor is arranged to vary the user determined orientation of the display area by successive increments of 90 degrees rotation about a first origin in the display.

The mobile device, wherein the processor, arranged to vary the user-determined size and orientation of the display area while the information content is displayed therein.

The mobile device, wherein the display has a plurality of edges and the control content is fixedly positioned at one edge of the display.

The mobile device, wherein the processor, is arranged to rotate the display area about a first axis and simultaneously rotate the control content about a second axis, by ninety degrees in response to second input from the user input device.

A method of controlling the display of a mobile device comprising the steps of:
displaying information content within a first display area with a first orientation;
changing the size of the first display area in response to input from a user; and
changing the orientation of the information content to a second orientation.

The method, further comprising the step of displaying control content adjacent an input key, indicating the key's function wherein the control content is maintained adjacent the input key.

The method, wherein the steps of changing the first orientation and changing the size of the first area are performed while displaying the information content.

The method, further comprising the step of changing the orientation of the control content when changing the orientation of the information content.

## Claims

1. A device (10) comprising:
a display (20), having a display area, for displaying information content;
a user input device (40); and
a processor (12), for controlling the display (20), arranged to incrementally change the size of the display area while displaying the information content, in response to successive inputs from the user input device (40).

2. A device (10) as claimed in claim 1, wherein the processor (12) is arranged, in response to input from the user input device (40) to change the display area size from a first one of a predetermined plurality of display area sizes to a second one of the predetermined plurality of display area sizes.

3. A device (10) as claimed in claim 1 or 2, comprising a radio frequency transceiver (50), wherein the information content originates in another device and is received by the radio frequency transceiver (50) from the another device.

4. A device (10) as claimed in any of the preceding claims, wherein the information content originates in the device (10).

5. A device (10) as claimed in any of the preceding claims, wherein the information content is alphanumeric text data.

6. A device (10) as claimed in claim 5, wherein the processor (12) is arranged to provide a text message handling application in which the display area for the text message is variable in response to input from the user input device (40).

7. A device (10) as claimed in any of the preceding claims, wherein the user input device (40) is a rotatable dial.

8. A device (10) as claimed in any of the preceding claims, wherein the information content includes a plurality of lines of alphanumeric characters, and incrementally changing the size of the display area changes the number of alphanumeric characters that are displayable in each line of the information content.

9. A device (10) as claimed in any of the preceding claims, wherein the processor (12) is arranged to incrementally change the display area without varying the orientation of the information content.

10. A device (10) as claimed in any of claims 1 to 8, wherein the information content has a first orientation, and the processor (12) is arranged to change the orientation of the information content from the first orientation to a second orientation.

11. A method, comprising:
displaying information content within a first display area; and
incrementally changing the size of the first display area while displaying the information content in response to successive inputs from a user.

12. A method as claimed in claim 11, wherein the information content includes a plurality of lines of alphanumeric characters, and incrementally changing the size of the first display area changes the number of alphanumeric characters that are displayed on each line of the information content.

13. A method as claimed in claim 11 or 12, wherein the size of the first display area is incrementally changed without varying the orientation of the information content.

14. A method as claimed in claim 11 or 12, further comprising changing the orientation of the information content from a first orientation to a second orientation.

15. A computer program comprising:
instructions for enabling a processor (12) to control a display (20) to display information content within a first display area; and
instructions for enabling a processor (12) to incrementally change the size of the first display area while the information content is displayed, in response to successive inputs from a user input device (40).

16. A computer program as claimed in claim 15, further comprising:
instructions for enabling a processor (12) to change the display area size from a first one of a predetermined plurality of display area sizes to a second one of the predetermined plurality of display area sizes, in response to input from the user input device (40).
